# EUROPÄISCHE PATENTSCHRIFT

(11) **EP 4 369 666 B1**
(45) Veröffentlichungstag und Bekanntmachung des Hinweises auf die Patenterteilung: **15.10.2025**
(21) Anmeldenummer: 23000145.5
(22) Anmeldetag: 02.11.2023
(51) Int. Cl.: H04L 12/46, H04L 12/40

(54) **KOMMUNIKATIONSSTRUKTUR EINER BEFÜLLANLAGE**
COMMUNICATION STRUCTURE OF FILLING SYSTEM
STRUCTURE DE COMMUNICATION D'UNE INSTALLATION DE REMPLISSAGE

(30) Priorität: 08.11.2022 DE 102022004151
(43) Veröffentlichungstag der Anmeldung: 15.05.2024
(73) Patentinhaber: Dürr Somac GmbH, 09366 Stollberg (DE)
(72) Erfinder: Ullmann, Christian, 08297 Zwönitz (DE)
(74) Vertreter: Findeisen Neumann Scheit Partnerschaft mbB

(56) Entgegenhaltungen:
- DE-A1- 102008 019 053
- US-A1- 2014 121 785
- US-A1- 2018 026 840

## Beschreibung

Die Erfindung betrifft eine Kommunikationsstruktur einer Befüllanlage.

Befüllanlagen dienen der Befüllung von Behältern mit Flüssigkeiten oder Gasen. Ein diesbezüglich typisches Anwendungsgebiet sind Kraftfahrzeuge, bei denen im Herstellungsprozess Kreisläufe, Ausgleichbehälter und dergleichen beispielsweise mit Bremsöl, Servoöl, Kühlflüssigkeit, Kältemittel, Wischwasser und Kraftstoff befüllt werden müssen. Hierzu weisen die Befüllanlagen Schläuche auf, mit denen das betreffende Medium aus Vorratsbehältern zum jeweiligen Behälter geleitet und über auf dem jeweiligen Behälter angepasste Befülladapter eingespeist wird. Daneben sind meist weitere Schlauchleitungen beispielsweise zur Vakuumbeaufschlagung und Belüftung der zu befüllenden Behälter sowie elektrische Leitungen für Aktoren zur Steuerung von Ventilen der Befülladapter vorgesehen. Weiterhin sind in den bekannten Befüllanlagen verschiedene Sensoren über elektrische Leitungen angebunden, so dass beispielsweise die Druckverhältnisse beim Evakuieren und Belüften des zu befüllenden Behälters oder auch die Umgebungsbedingungen (Umgebungsdruck, Umgebungstemperatur, Umgebungsfeuchtigkeit) der Befüllanlage erfasst werden können. Darüber hinaus werden auch die Ventilstellungen der Ventile des Befülladapters überwacht. Eine derartige Befüllanlage ist beispielsweise aus der DE 10 2014 004 822 A1 bekannt. Üblicherweise sind die Befüllanlagen mit einer Kommunikationsstruktur ausgebildet, bei der die elektrischen Leitungen der Aktorik und Sensorik mit einer übergeordneten Anlagensteuerung (SPS) der Befüllanlage verbunden sind. Dies bietet die Möglichkeit, eine Vielzahl Industriesensorik und Industrieaktorik unterschiedlicher Hersteller zu kombinierer Aus der US 2014/121785 sind ein System und ein Verfahren zur Parametrierung von Feldgeräten eines Automatisierungs- oder Steuerungssystems bekannt, wobei in der Kommunikationsstruktur des Automatisierungs- und Steuerungssystems sowohl ein Industrial-Ethernet-Bussystem als auch ein CANopen basiertes Bussystem zur Anwendung kommen.

Nachteilig ist allerdings, dass einheitliche Industriestandards nur Standardfunktionalitäten aufgrund der unterschiedlichen Hersteller ermöglichen. Weiterhin sind keine tiefgreifenden Diagnosemöglichkeiten mit einer Visualisierung möglich. Darüber hinaus ist auch keine Spezialisierung der Aktorik und Sensorik auf Befüllanlagen möglich. Auf Befüllanlagen spezialisierte Aktorik und Sensorik ist meist nicht mit einer Schnittstelle zum Industrial-Ethernet-Bussystem ausgestattet.

Aufgabe der Erfindung ist es daher, eine Kommunikationsstruktur für eine Befüllanlage zu schaffen, welche die Integration von auf Befüllanlagen spezialisierter Aktorik und Sensorik zulässt. Darüber hinaus soll die Kommunikationsstruktur eine verbesserte Diagnosefähigkeit aufweisen.

Diese Aufgabe wird dadurch gelöst, dass
- die Kommunikationsstruktur als Master-Slave-Struktur ausgeführt ist,
- die Kommunikationsstruktur ein mit einer übergeordneten Anlagensteuerung (SPS) verbundenes Industrial-Ethernet-Bussystem aufweist,
- die Kommunikationsstruktur zumindest ein Gateway mit zumindest einer Industrial-Ethernet-Schnittstelle und zumindest einer CANopen-Schnittstelle aufweist und wobei das zumindest eine Gateway über die Industrial-Ethernet-Schnittstelle mit dem Industrial-Ethernet-Bussystem verbunden ist,
- die Kommunikationsstruktur zumindest eine Kontrolleinheit mit zumindest einer CANopen-Schnittstelle aufweist und die CANopen-Schnittstelle des zumindest einen Gateways mit der CANopen-Schnittstelle der zumindest einen Kontrolleinheit verbunden ist und wobei das zumindest eine Gateway den Master der zumindest einen Kontrolleinheit bildet,
- die zumindest eine Kontrolleinheit einen A/D-Spannungswandler zur Spannungsversorgung für zumindest eine Ventilbaugruppe eines Befülladapters der Befüllanlage bereitstellt und die Kontrolleinheit hierzu mit einer elektrischen Schnittstelle mit der zumindest einem Ventilbaugruppe verbunden ist,
- eine Industrial-Ethernet-Schnittstelle einer Befülladaptersteuerung der Befüllanlage mit dem Industrial-Ethernet-Bussystem verbunden ist und
- eine weitere Industrial-Ethernet-Schnittstelle der Befülladaptersteuerung mit einer Industrial-Ethernet-Schnittstelle des Befülladapters verbunden ist.

In einer Ausführung ist das Industrial-Ethernet-Bussystem ein Ethernet/IP-Bussystem oder ein Profinet-Bussystem.

Die erfindungsgemäße Kommunikationsstruktur der Befüllanlage verknüpft vorhandene Industriestandards (CANopen, Ethernet/IP, Profinet) und erweitert diese mit Schnittstellen zur Integration von auf Befüllanlagen spezialisierter Aktorik und Sensorik. Dies ermöglicht eine verbesserte Diagnosefähigkeit der Befüllanlage und deren Komponenten.

Das zumindest eine Gateway dient der Kopplung zwischen dem Industrial-Ethernet-Bussystem (Ethernet/IP, Profinet) und der zumindest einen CANopen-Schnittstelle. Über das dieser Kopplung zugrundeliegende Übertragungsprotokoll können prozessrelevante Daten zyklisch und vom Master angeforderte Diagnosedaten azyklisch übertragen werden. Derartige Daten können beispielsweise die folgenden sein:
- Status LEDs (Druckluft, Spannungsniveaus)
- zyklisch: Ventilansteuerungen, Sensordaten
- azyklisch: Diagnose der dem zumindest einem Gateway untergeordneten Komponenten
- Selbstüberwachung der Funktionsfähigkeit aller an dem zumindest einen Gateway angeschlossenen Komponenten

Die zumindest eine Kontrolleinheit verwaltet das zumindest eine Ventil der Ventilbaugruppe des Befülladapters der Befüllanlage durch Bereitstellung eines A/D-Spannungswandlers zur Spannungsversorgung des zumindest einen Ventils.

An dem zumindest einen Gateway können auch mehr als eine Kontrolleinheit über die CANopen-Schnittstelle angebunden werden.

Durch die Anbindung der Adaptersteuerung über die Industrial-Ethernet-Schnittstelle mit dem zumindest einen Gateway ist die Adaptersteuerung in das Kommunikationsnetzwerk eingebunden, was den Zugriff auf die Adaptersteuerung von allen Punkten des Netzwerks aus ermöglicht. Die Befülladaptersteuerung dient der Ansteuerung der Ventile des Befülladapters über die weitere Industrial-Ethernet-Schnittstelle.

Mit der Anbindung des Befülladapters über die Industrial-Ethernet-Schnittstelle ist der Befülladapter selbst ebenfalls Bestandteil der Kommunikationsstruktur, so dass ein Zugriff von allen Punkten der Kommunikationsstruktur möglich ist. Von dem Befülladapter können damit prozessrelevante Daten zyklisch sowie Diagnose- und Wartungsdaten azyklisch weitergeleitet werden.

In einer vorteilhaften Ausgestaltung weist das zumindest eine Gateway eine Schnittstelle zur Anbindung eines Umweltsensors auf, wobei dieser Umweltsensor zur Erfassung des Luftdrucks und/oder der Temperatur und/oder der Feuchtigkeit der Umgebung der Befüllanlage ausgebildet ist.

Durch die Erfassung der genannten Größen mit dem Umweltsensor kann auf spezielle Einsatzgebiete prozesstechnisch reagiert werden. Beispielsweise:
- Temperaturkompensation für dynamische Vakuumzeiten bei Kühlerbefüllung
- Feuchtigkeitskompensation für dynamische Vakuumzeiten bei der Bremsbefüllung.

Es wird vorgeschlagen, dass die Kontrolleinheit zumindest eine Schnittstelle zum Anschluss zumindest eines Drucksensors und/oder zumindest eine Schnittstelle zum Anschluss zumindest eines Temperatursensors aufweist. Somit können weitere Drucksensoren und/oder Temperatursensoren zur Überwachung des Befüllvorgangs in die Kommunikationsstruktur eingebunden werden.

In einer vorteilhaften Ausgestaltung ist die zumindest eine Schnittstelle der Kontrolleinheit zum Anschluss des zumindest einen Drucksensors und/oder die zumindest eine Schnittstelle der Kontrolleinheit zum Anschluss des zumindest einen Temperatursensors eine TEDS-Schnittstelle.

Eine TEDS-Schnittstelle (nach IEEE1451 - offene, netzwerkunabhängige Schnittstelle) ermöglicht es, servicerelevante Daten abzuspeichern (z.B. Stützstellen zur Kalibrierung, Kalibrierungszyklen, Datum der letzten Kalibrierung). Diese Daten können dann ausgelesen, analysiert und bei Bedarf weitergeleitet werden. Derartige Daten können beispielsweise folgende sein:
- Datum der letzten Kalibrierung (Meldung bei Notwendigkeit einer Kalibrierung kann an SPS weitergeleitet und eine Warnmeldung ausgegeben werden)

Sensoren mit TEDS-Schnittstelle verfügen über eine ein-eindeutige ID, wodurch ein Tausch nachvollzogen und automatisch dokumentiert werden kann (Log-Funktion).

Eine weitere Ausführung sieht vor, dass der elektrische Steckverbinder zwischen der Kontrolleinheit und der zumindest einen Ventilbaugruppe ein M12-Industriesteckverbinder ist. Die Verbindung zwischen Ventilbaugruppe (Ventil, Vorsteuerventil, Stellungsüberwachung) und dem A/D-Spannungswandler der Kontrolleinheit ist damit schnell lösbar.

In einer vorteilhaften Ausgestaltung weist die Kontrolleinheit zumindest eine M23-Industriesteckverbinder-Schnittstelle auf. Ein M23-Industriesteckverbinder ist ebenfalls schnell lösbar.

Es wird vorgeschlagen, dass die zumindest eine M23-Industriesteckverbinder-Schnittstelle mit einem Schnittstellenverteiler verbunden ist und dieser Schnittstellenverteiler zumindest zwei M12-Schnittstellen zur Anbindung weiterer Drucksensoren und/oder Temperatursensoren aufweist. Somit können weitere Drucksensoren und/oder Temperatursensoren zur Überwachung des Befüllvorgangs in das Kommunikationsnetzwerk eingebunden werden.

Es wird vorgeschlagen, dass das zumindest eine Gateway ein integriertes Speichermedium zur Aufnahme der von der zumindest einen Kontrolleinheit übermittelten Daten aufweist. Die von der Ventilbaugruppe und/oder den Sensoren übermittelten Daten können damit im Gateway zwischengespeichert und ggf. mittels eines Datenprozessors des Gateways vorverarbeitet werden. Das integrierte Speichermedium des Gateways kann weiterhin zur Dokumentenablage (z.B. Handbücher) genutzt werden.

Weiterhin wird vorgeschlagen, dass das zumindest eine Gateway einen Steckplatz zur Aufnahme eines weiteren wechselbaren Speichermediums aufweist. Auf diesem wechselbaren Speichermedium können beispielsweise systemrelevante Daten hinterlegt werden. Beim Tausch des Gateways kann das wechselbare Speichermedium entnommen und im neuen Gateway eingebaut werden, so dass die systemrelevanten Daten ins neue Gateway überführt werden können. Systemrelevante Daten können beispielsweise die Konfigurationen untergelagerter Baugruppen (Kontrolleinheiten) sein. Das System wird damit Plug-and-Play fähig. Das Gateway kann damit so ausgeführt werden, dass beim Tausch einer Kontrolleinheit (z.B. aufgrund eines Defekts) die Kompatibilität geprüft und automatisch die notwendige Konfiguration über das Bussystem auf die neue Kontrolleinheit eingespielt wird.

Eine Ausgestaltung sieht vor, dass das zumindest eine Gateway einen Webserver aufweist und dieser Webserver über eine Netzwerkschnittstelle des Gateways kontaktierbar ist. Zum einen können die vom Gateway erfassten Daten mittels des Webservers visualisiert werden. Zum anderen bietet der Webserver die Möglichkeit, Software-Updates einzuspielen.

Das zumindest eine Gateway dient weiterhin der Erfassung von Zyklen und Wartungstätigkeiten im Wartungsbuch und der Anzeige beim Erreichen von Wartungsintervallen. Darüber hinaus ermöglicht die Erfassung der verschiedenen Daten im Gateway auch eine vereinfachte Inbetriebnahme durch einen im Gateway hinterlegten automatisierten Erstinbetriebnahmeablauf (inkl. vollständiger Prozesswerterkennung).

Es wird vorgeschlagen, dass die Kommunikationsstruktur als Sternstruktur oder als Ringstruktur oder als eine Kombination aus Stern- und Ringstruktur ausgebildet ist.

Mit der erfindungsgemäßen Kommunikationsstruktur werden alle Komponenten (Kontrolleinheit, Adaptersteuerung, Befülladapter, Sensoren) ohne zusätzliche Busknoten eingebunden. Es sind keine speziellen Komponenten für unterschiedliche Bussysteme notwendig, da die vorgesehenen Komponenten (Gateway, Kontrolleinheit, Adaptersteuerung, Befülladapter, Sensoren) für die üblichen Industriestandards vorgesehen/ausgelegt sind. Über die Kommunikationsstruktur ist ein Zugriff auf alle Komponenten von allen Punkten der Kommunikationsstruktur aus möglich.

Durch die erfindungsgemäße Kommunikationsstruktur können auf Befüllanlagen spezialisierte Aktorik und Sensorik an das Industrial-Ethernet-Bussystem eingebunden werden.

Insgesamt wird eine Reduzierung des Verkabelungsaufwands durch die Nutzung von Bussystemen erreicht.

Die Integration des A/D-Spannungswandlers in der zumindest einen Kontrolleinheit reduziert die Fehleranfälligkeit.

Die Interaktion über die Kommunikationsstruktur zwischen den Komponenten ermöglicht die Durchführung komplexer Aufgaben (z.B. durchgängige Reinigungsfunktionen von Ventilen bis Adapter).

Nachfolgend wird ein Ausführungsbeispiel der Erfindung anhand der Zeichnungen erläutert.

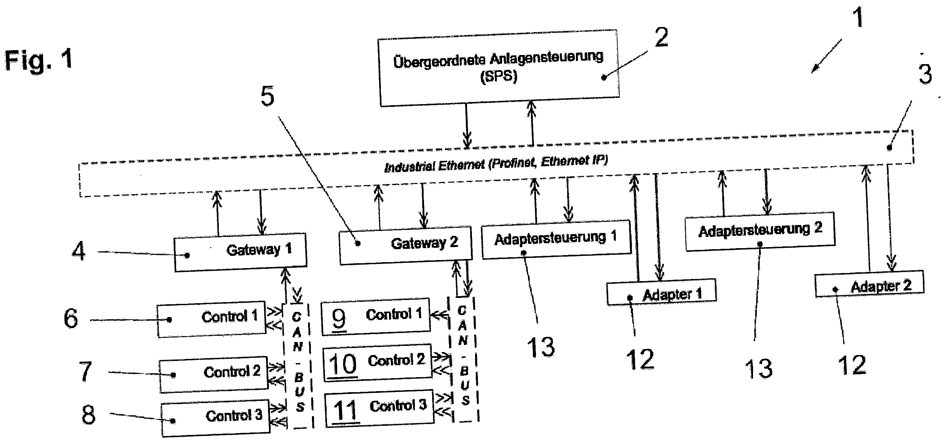

**Fig. 1** zeigt schematisch eine Ausführung der erfindungsgemäßen Kommunikationsstruktur 1 einer Befüllanlage. Die Befüllanlage selbst ist nicht dargestellt. Die Kommunikationsstruktur 1 ist als Master-Slave-Struktur ausgeführt und weist ein mit einer übergeordneten Anlagensteuerung (SPS) 2 verbundenes Industrial-Ethernet-Bussystem 3 auf. In der dargestellten Ausführung weist die Kommunikationsstruktur zwei Gateways 4, 5 auf, die jeweils über eine Industrial-Ethernet-Schnittstelle mit dem Industrial-Ethernet-Bussystem 3 verbunden sind. Weiterhin sind beide Gateways 4, 5 mit einer CANopen-Schnittstelle ausgebildet. Die erfindungsgemäße Kommunikationsstruktur ist nicht auf zwei Gateways 4 ,5 beschränkt, sondern kann auch nur ein Gateway 4, 5 oder mehr als zwei Gateways 4, 5 aufweisen. Weiterhin weist die Kommunikationsstruktur 1 zumindest eine Kontrolleinheit 6, 7, 8, 9, 10, 11 mit zumindest einer CANopen-Schnittstelle auf, wobei die CANopen-Schnittstelle des zumindest einen Gateways 4, 5 mit der CANopen-Schnittstelle der zumindest einen Kontrolleinheit 6, 7, 8, 9, 10, 11 verbunden ist. In der dargestellten Ausführung sind dem Gateway 4 die drei Kontrolleinheiten 6, 7, 8 und dem Gateway 5 die drei Kontrolleinheiten 9, 10, 11 zugeordnet, ohne dass die Erfindung hierauf beschränkt ist. Einem Gateway 4, 5 kann auch nur eine, zwei oder mehr als drei Kontrolleinheiten 6, 7, 8, 9, 10, 11 zugeordnet sein. Das Gateway 4, 5 bildet jeweils den Master der zugeordneten Kontrolleinheiten 6, 7, 8, 9, 10, 11.

Die Kontrolleinheiten 6, 7, 8, 9, 10, 11 stellen jeweils einen A/D-Spannungswandler zur Spannungsversorgung für zumindest eine Ventilbaugruppe eines Befülladapters 12 der Befüllanlage bereit, wobei die Kontrolleinheit 6, 7, 8, 9, 10, 11 hierzu mit einer elektrischen Schnittstelle mit der zumindest einen Ventilbaugruppe verbunden ist. Eine Befülladaptersteuerung 13 der Befüllanlage ist über eine Industrial-Ethernet-Schnittstelle mit dem Industrial-Ethernet-Bussystem 3 verbunden. Eine weitere Industrial-Ethernet-Schnittstelle der Befülladaptersteuerung 13 ist wiederum mit einer Industrial-Ethernet-Schnittstelle des Befülladapters 12 verbunden.

In der dargestellten Ausführung ist das Industrial-Ethernet-Bussystem ein Ethernet/IP-Bussystem oder eine Profinet-Bussystem. Das Kommunikationsstruktur ist als Sternstruktur ausgeführt, wobei die Erfindung nicht hierauf beschränkt ist. In einer alternativen Ausführung ist die Kommunikationsstruktur als Ringstruktur oder als eine Kombination aus Stern- und Ringstruktur ausgebildet.

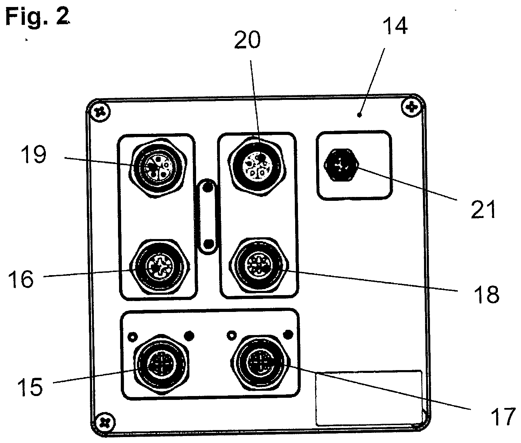

**Fig. 2** zeigt eine Frontansicht eines Gehäuses 14 welches die beiden in **Fig. 1** dargestellten Gateways 4, 5 aufnimmt. An dem Gehäuse sind die Industrial-Ethernet-Schnittstelle 15 und die CANopen-Schnittstelle 16 des Gateways 4 sowie die Industrial-Ethernet-Schnittstelle 17 und die CANopen-Schnittstelle 18 des Gateways 5 sichtbar. Weiterhin sind ein Spannungsversorgungseingang 19 des Gateways 4 und ein Spannungsversorgungseingang 20 des Gateways 5 vorgesehen.

Darüber hinaus ist an dem Gehäuse eine Schnittstelle 21 des Gateways 4, 5 zur Anbindung eines Umweltsensors vorgesehen, wobei dieser Umweltsensor zur Erfassung des Luftdrucks und/oder der Temperatur und/oder der Feuchtigkeit der Umgebung der Befüllanlage ausgebildet ist. Der Umweltsensor selbst ist allerdings nicht dargestellt.

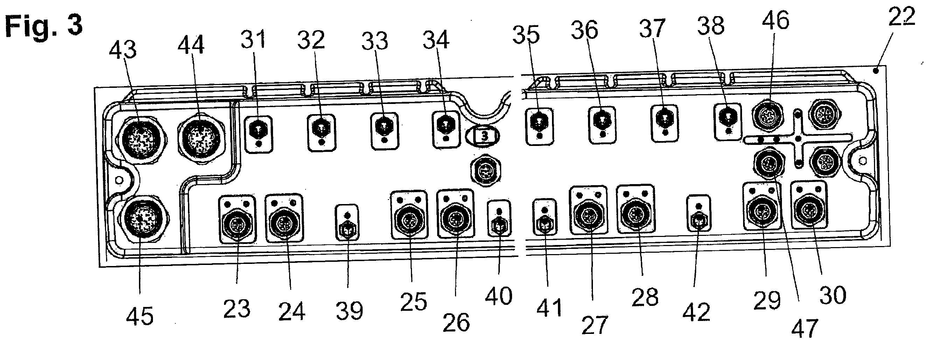

**Fig. 3** zeigt eine Frontansicht eines Gehäuses 22 einer der in **Fig. 1** dargestellten Kontrolleinheiten 6, 7, 8, 9, 10, 11. In der dargestellten Ausführung weist die Kontrolleinheit 6, 7, 8, 9, 10, 11 acht Schnittstellen 23, 24, 25, 26, 27, 28, 29, 30 zur Anbindung von bis zu acht Ventilen der Ventilbaugruppe auf. Die Erfindung ist allerdings nicht auf diese Anzahl beschränkt. Über diese Schnittstellen 23, 24, 25, 26, 27, 28, 29, 30 erfolgt eine Spannungsversorgung der zugeordneten Ventile der Baugruppe sowie eine Datenübertragung der Stellungsüberwachung dieser Ventile an die Kontrolleinheit. Die Schnittstellen 23, 24, 25, 26, 27, 28, 29, 30 sind als M12-Industriesteckverbindungen ausgeführt, ohne dass die Erfindung hierauf beschränkt wäre.

Weiterhin sind am Gehäuse 22 der Kontrolleinheit 6, 7, 8, 9, 10, 11 acht Schnittstellen 31, 32, 33, 34, 35, 36, 37, 38 zur Anbindung von bis zu acht Drucksensoren und vier Schnittstellen 39, 40, 41, 42 zur Anbindung von bis zu vier Temperatursensoren vorgesehen, ohne dass die Erfindung aber auf diese Anzahl beschränkt wäre. In der dargestellten Ausführung sind die Schnittstellen 31, 32, 33, 34, 35, 36, 37, 38, 39, 40, 41, 42 als TEDS-Schnittstellen ausgeführt, ohne dass die Erfindung hierauf beschränkt ist.

Darüber hinaus sind am Gehäuse 22 der Kontrolleinheit 6, 7, 8, 9, 10, 11 drei M23-Industriesteckverbinder-Schnittstellen 43, 44, 45 ausgebildet. Diese Schnittstellen 43, 44, 45 sind jeweils mit einem Schnittstellenverteiler verbindbar, wobei diese Schnittstellenverteiler zumindest zwei M12-Schnittstellen zur Anbindung weiterer Drucksensoren und/oder Temperatursensoren zur Überwachung des Befüllvorgangs aufweisen.

Zur Verbindung des Gateways 4, 5 mit der jeweils zugeordneten Kontrolleinheit 6, 7, 8, 9, 10, 11 sind am Gehäuse 22 der Kontrolleinheit Ausgänge 46, 47 der CANopen-Schnittstellen vorgesehen.

Das zumindest eine Gateway 4, 5 weist ein integriertes Speichermedium zur Aufnahme der von der zumindest einen Kontrolleinheit 6, 7, 8, 9, 10, 11 übermittelten Daten auf. Weiterhin ist am zumindest einen Gateway 4, 5 ein Steckplatz zur Aufnahme eines weiteren wechselbaren Speichermediums vorgesehen. Darüber hinaus ist das zumindest eine Gateway 4, 5 mit einem Webserver ausgebildet, wobei dieser Webserver über eine Netzwerkschnittstelle des Gateways 4, 5 kontaktierbar ist.

### Bezugszeichenliste

- 1: Kommunikationsstruktur
- 2: übergeordnete Anlagensteuerung (SPS)
- 3: Industrial-Ethernet-Bussystem
- 4 - 5: Gateway
- 6 - 11: Kontrolleinheit
- 12: Befülladapter
- 13: Befülladaptersteuerung
- 14: Gehäuse
- 15: Industrial-Ethernet-Schnittstelle
- 16: CANopen-Schnittstelle
- 17: Industrial-Ethernet-Schnittstelle
- 18: CANopen-Schnittstelle
- 19, 20: Spannungsversorgungseingang
- 21: Schnittstelle für Umweltsensor
- 22: Gehäuse
- 23 - 30: Schnittstelle für Ventilbaugruppe
- 31 - 38: Schnittstelle für Drucksensoren
- 39 - 42: Schnittstelle für Temperatursensoren
- 43 - 45: M23-Industriesteckverbinder-Schnittstelle
- 46, 47: CANopen-Schnittstelle

## Patentansprüche

1. Kommunikationsstruktur (1) einer Befüllanlage,
- wobei die Kommunikationsstruktur (1) als Master-Slave-Struktur ausgeführt ist,
- wobei die Kommunikationsstruktur (1) ein mit einer übergeordneten Anlagensteuerung (SPS) (2) verbundenes Industrial-Ethernet-Bussystem (3) aufweist,
- wobei die Kommunikationsstruktur (1) zumindest ein Gateway (4, 5) mit zumindest einer Industrial-Ethernet-Schnittstelle (15, 17) und zumindest einer CANopen-Schnittstelle (16, 18) aufweist und wobei das zumindest eine Gateway (4, 5) über die Industrial-Ethernet-Schnittstelle (15, 17) mit dem Industrial-Ethernet-Bussystem (3) verbunden ist,
- wobei die Kommunikationsstruktur (1) zumindest eine Kontrolleinheit (6, 7, 8, 9, 10, 11) mit zumindest einer CANopen-Schnittstelle (46, 47) aufweist und die CANopen-Schnittstelle (15, 17) des zumindest einen Gateways (4, 5) mit der CANopen-Schnittstelle (46, 47) der zumindest einen Kontrolleinheit (6, 7, 8, 9, 10, 11) verbunden ist und wobei das zumindest eine Gateway (4, 5) den Master der zumindest einen Kontrolleinheit (6, 7, 8, 9, 10, 11) bildet,
- wobei die zumindest eine Kontrolleinheit (6, 7, 8, 9, 10, 11) einen A/D-Spannungswandler zur Spannungsversorgung für zumindest eine Ventilbaugruppe eines Befülladapters (12) der Befüllanlage bereitstellt und die Kontrolleinheit (6, 7, 8, 9, 10, 11) hierzu mit einer elektrischen Schnittstelle (23, 24, 25, 26, 27, 28, 29, 30) mit der zumindest einen Ventilbaugruppe verbunden ist,
- wobei eine Industrial-Ethernet-Schnittstelle einer Befülladaptersteuerung (13) der Befüllanlage mit dem Industrial-Ethernet-Bussystem (3) verbunden ist und
- wobei eine weitere Industrial-Ethernet-Schnittstelle der Befülladaptersteuerung (13) mit einer Industrial-Ethernet-Schnittstelle des Befülladapters (12) verbunden ist.

2. Kommunikationsstruktur (1) nach Anspruch 1, **dadurch gekennzeichnet,**
**dass** das Industrial-Ethernet-Bussystem (3) ein Ethernet/IP-Bussystem oder ein Profinet-Bussystem ist.

3. Kommunikationsstruktur (1) nach mindestens einem der vorgenannten Ansprüche, **dadurch gekennzeichnet, dass** das zumindest eine Gateway (4, 5) eine Schnittstelle (21) zur Anbindung eines Umweltsensors aufweist und dieser Umweltsensor zur Erfassung des Luftdrucks und/oder der Temperatur und/oder der Feuchtigkeit der Umgebung der Befüllanlage ausgebildet ist.

4. Kommunikationsstruktur (1) nach mindestens einem der vorgenannten Ansprüche, **dadurch gekennzeichnet, dass** das zumindest eine Gateway (4, 5) ein integriertes Speichermedium zur Aufnahme der von der zumindest einen Kontrolleinheit (6, 7, 8, 9, 10, 11) übermittelten Daten aufweist.

5. Kommunikationsstruktur (1) nach mindestens einem der vorgenannten Ansprüche, **dadurch gekennzeichnet, dass** das zumindest eine Gateway (4, 5) einen Steckplatz zur Aufnahme eines weiteren wechselbaren Speichermediums aufweist.

6. Kommunikationsstruktur (1) nach mindestens einem der vorgenannten Ansprüche, **dadurch gekennzeichnet, dass** das zumindest eine Gateway (4, 5) einen Webserver aufweist und dieser Webserver über eine Netzwerkschnittstelle des Gateways (4, 5) kontaktierbar ist.

7. Kommunikationsstruktur (1) nach mindestens einem der vorgenannten Ansprüche, **dadurch gekennzeichnet, dass** die Kontrolleinheit (6, 7, 8, 9, 10, 11) zumindest eine Schnittstelle (31, 32, 33, 34, 35, 36, 37, 38) zum Anschluss zumindest eines Drucksensors und/oder zumindest eine Schnittstelle (39, 40, 41, 42) zum Anschluss zumindest eines Temperatursensors aufweist.

8. Kommunikationsstruktur (1) nach Anspruch 7, **dadurch gekennzeichnet, dass** die zumindest eine Schnittstelle (31, 32, 33, 34, 35, 36, 37, 38) der Kontrolleinheit (6, 7, 8, 9, 10, 11) zum Anschluss des zumindest einen Drucksensors und/oder die zumindest eine Schnittstelle (39, 40, 41, 42) der Kontrolleinheit (6, 7, 8, 9, 10, 11) zum Anschluss des zumindest einen Temperatursensors eine TEDS-Schnittstelle ist.

9. Kommunikationsstruktur (1) nach mindestens einem der vorgenannten Ansprüche, **dadurch gekennzeichnet, dass** die elektrische Schnittstelle (23, 24, 25, 26, 27, 28, 29, 30) zwischen der Kontrolleinheit (6, 7, 8, 9, 10, 11) und der zumindest einen Ventilbaugruppe ein M12-Industriesteckverbinder ist.

10. Kommunikationsstruktur (1) nach mindestens einem der vorgenannten Ansprüche, **dadurch gekennzeichnet, dass** die Kontrolleinheit (6, 7, 8, 9, 10, 11) zumindest eine M23-Industriesteckverbinder-Schnittstelle (43, 44, 45) aufweist.

11. Kommunikationsstruktur (1) nach mindestens einem der vorgenannten Ansprüche, **dadurch gekennzeichnet, dass** die zumindest eine M23-Industriesteckverbinder-Schnittstelle (43, 44, 45) mit einem Schnittstellenverteiler verbunden ist und dieser Schnittstellenverteiler zumindest zwei M12-Schnittstellen zur Anbindung weiterer Drucksensoren und/oder Temperatursensoren aufweist.

12. Kommunikationsstruktur (1) nach mindestens einem der vorgenannten Ansprüche, **dadurch gekennzeichnet, dass** die Kommunikationsstruktur (1) als Sternstruktur oder als Ringstruktur oder als eine Kombination aus Stern- und Ringstruktur ausgebildet ist.

## Claims

1. Communication structure (1) of a filling system,
- wherein the communication structure (1) is configured as a master-slave architecture,
- wherein the communication structure (1) comprises an Industrial Ethernet bus system (3) connected to a higher-level system controller (PLC) (2),
- wherein the communication structure (1) comprises at least one gateway (4, 5) with at least one Industrial Ethernet interface (15, 17) and at least one CANopen interface (16, 18) and wherein the at least one gateway (4, 5) is connected to the Industrial Ethernet bus system (3) via the Industrial Ethernet interface (15, 17),
- wherein the communication structure (1) comprises at least one control unit (6, 7, 8, 9, 10, 11) with at least one CANopen interface (46, 47) and the CANopen interface (15, 17) of the at least one gateway (4, 5) is connected to the CANopen interface (46, 47) of the at least one control unit (6, 7, 8, 9, 10, 11) and wherein the at least one gateway (4, 5) acts as the master for the at least one control unit (6, 7, 8, 9, 10, 11),
- wherein the at least one control unit (6, 7, 8, 9, 10, 11) provides an A/D voltage converter for supplying power to at least one valve assembly of a filling adapter (12) of the filling system and the control unit (6, 7, 8, 9, 10, 11) is connected to the at least one valve assembly via an electrical interface (23, 24, 25, 26, 27, 28, 29, 30) for this purpose,
- wherein an Industrial Ethernet interface of a filling adapter controller (13) of the filling system is connected to the Industrial Ethernet bus system (3) and
- wherein another Industrial Ethernet interface of the filling adapter controller (13) is connected to an Industrial Ethernet interface of the filling adapter (12).

2. Communication structure (1) according to claim 1, **characterised in that** the Industrial Ethernet bus system (3) is an Ethernet/IP bus system or a PROFINET bus system.

3. Communication structure (1) according to at least one of the preceding claims, **characterised in that** the at least one gateway (4, 5) comprises an interface (21) for connecting an environmental sensor, and that this environmental sensor is designed to detect the air pressure and/or the temperature and/or the humidity of the environment surrounding the filling system.

4. Communication structure (1) according to at least one of the preceding claims, **characterised in that** the at least one gateway (4, 5) comprises an integrated storage medium for recording the data transmitted by the at least one control unit (6, 7, 8, 9, 10, 11).

5. Communication structure (1) according to at least one of the preceding claims, **characterised in that** the at least one gateway (4, 5) comprises a slot for receiving an additional removable storage medium.

6. Communication structure (1) according to at least one of the preceding claims, **characterised in that** the at least one gateway (4, 5) comprises a web server and that this web server is accessible via a network interface of the gateway (4, 5).

7. Communication structure (1) according to at least one of the preceding claims, **characterised in that** the control unit (6, 7, 8, 9, 10, 11) comprises at least one interface (31, 32, 33, 34, 35, 36, 37, 38) for connecting at least one pressure sensor, and/or at least one interface (39, 40, 41, 42) for connecting at least one temperature sensor.

8. Communication structure (1) according to claim 7, **characterised in that** the at least one interface (31, 32, 33, 34, 35, 36, 37, 38) of the control unit (6, 7, 8, 9, 10, 11) for connecting the at least one pressure sensor, and/or the at least one interface (39, 40, 41, 42) of the control unit (6, 7, 8, 9, 10, 11) for connecting the at least one temperature sensor, is a TEDS interface.

9. Communication structure (1) according to at least one of the preceding claims, **characterised in that** the electrical interface (23, 24, 25, 26, 27, 28, 29, 30) between the control unit (6, 7, 8, 9, 10, 11) and the at least one valve assembly is an M12 industrial connector.

10. Communication structure (1) according to at least one of the preceding claims, **characterised in that** the control unit (6, 7, 8, 9, 10, 11) comprises at least one M23 industrial connector interface (43, 44, 45).

11. Communication structure (1) according to at least one of the preceding claims, **characterised in that** the at least one M23 industrial connector interface (43, 44, 45) is connected to an interface distributor, and that this interface distributor comprises at least two M12 interfaces for connecting additional pressure sensors and/or temperature sensors.

12. Communication structure (1) according to at least one of the preceding claims, **characterised in that** the communication structure (1) is configured as a star topology, a ring topology or a combination of star and ring topologies.

## Revendications

1. Structure de communication (1) d'une installation de remplissage, **caractérisée en ce que**
- la structure de communication (1) est conçue en tant qu'architecture maître-esclave,
- la structure de communication (1) comporte un système de bus Ethernet industriel (3) relié à une commande d'installation amont (API) (2),
- la structure de communication (1) comporte au moins une passerelle (4, 5) avec au moins une interface Ethernet industriel (15, 17) et au moins une interface CANopen (16, 18) et **en ce qu'**au moins l'une des passerelles (4, 5) est reliée au système de bus Ethernet industriel (3) via l'interface Ethernet industrielle (15, 17),
- la structure de communication (1) comporte au moins une unité de commande (6, 7, 8, 9, 10, 11) avec au moins une interface CANopen (46, 47) et l'interface CANopen (15, 17) d'au moins l'une passerelle (4, 5) est reliée à l'interface CANopen (46, 47) d'au moins une unité de commande (6, 7, 8, 9, 10, 11), au moins une passerelle (4, 5) assurant la fonction de maître d'au moins l'une des unités de commande (6, 7, 8, 9, 10, 11),
- au moins l'une des unités de commande (6, 7, 8, 9, 10, 11) met à disposition un convertisseur de tension A/C pour l'alimentation électrique d'au moins un groupe de vannes d'un adaptateur de remplissage (12) de l'installation de remplissage et **en ce que** l'unité de commande (6, 7, 8, 9, 10, 11) est reliée à cet effet, via une interface électrique (23, 24, 25, 26, 27, 28, 29, 30), à au moins un groupe de vannes,
- une interface Ethernet industriel d'une commande de l'adaptateur de remplissage (13) de l'installation de remplissage est reliée au système de bus Ethernet industriel (3) et
- une autre interface Ethernet industriel de la commande de l'adaptateur de remplissage (13) est reliée à une interface Ethernet industrielle de l'adaptateur de remplissage (12).

2. Structure de communication (1) selon la revendication 1, **caractérisée en ce que** le système de bus Ethernet industriel (3) est un système de bus Ethernet/IP ou un système de bus PROFINET.

3. Structure de communication (1) selon au moins l'une des revendications précédentes, **caractérisée en ce qu'**au moins une passerelle (4, 5) comporte une interface (21) permettant le raccordement d'un capteur environnemental, ce capteur environnemental étant conçu pour détecter la pression atmosphérique et/ou la température et/ou l'humidité ambiantes de l'environnement de l'installation de remplissage.

4. Structure de communication (1) selon au moins l'une des revendications précédentes, **caractérisée en ce qu'**au moins une passerelle (4, 5) comporte un support de stockage intégré pour enregistrer les données transmises par au moins l'une des unités de commande (6, 7, 8, 9, 10, 11).

5. Structure de communication (1) selon au moins l'une des revendications précédentes, **caractérisée en ce qu'**au moins l'une des passerelles (4, 5) comporte un emplacement destiné à un autre support de stockage amovible.

6. Structure de communication (1) selon au moins l'une des revendications précédentes, **caractérisée en ce qu'**au moins l'une des passerelles (4, 5) comporte un serveur web et qu'il est possible de communiquer avec ce serveur web via une interface réseau de la passerelle (4, 5).

7. Structure de communication (1) selon au moins l'une des revendications précédentes, **caractérisée en ce que** l'unité de commande (6, 7, 8, 9, 10, 11) comporte au moins une interface (31, 32, 33, 34, 35, 36, 37, 38) pour le raccordement d'au moins un capteur de pression et/ou au moins une interface (39, 40, 41, 42) pour le raccordement d'au moins un capteur de température.

8. Structure de communication (1) selon la revendication 7, **caractérisée en ce qu'**au moins l'une des interfaces (31, 32, 33, 34, 35, 36, 37, 38) de l'unité de commande (6, 7, 8, 9, 10, 11) destinée au raccordement d'au moins l'un des capteurs de pression et/ou au moins l'une des interfaces (39, 40, 41, 42) de l'unité de commande (6, 7, 8, 9, 10, 11) pour le raccordement d'au moins un capteur de température est une interface TEDS.

9. Structure de communication (1) selon au moins l'une des revendications précédentes, **caractérisée en ce que** l'interface électrique (23, 24, 25, 26, 27, 28, 29, 30) entre l'unité de commande (6, 7, 8, 9, 10, 11) et au moins un groupe de vannes est un connecteur industriel M12.

10. Structure de communication (1) selon au moins l'une des revendications précédentes, **caractérisée en ce que** l'unité de commande (6, 7, 8, 9, 10, 11) comporte au moins une interface de type connecteur industriel M23 (43, 44, 45).

11. Structure de communication (1) selon au moins l'une des revendications précédentes, **caractérisée en ce qu'**au moins une interface de type connecteur industriel M23 (43, 44, 45) est reliée à un répartiteur d'interface et **en ce que** ce répartiteur d'interface comporte au moins deux interfaces M12 pour le raccordement d'autres capteurs de pression et/ou de température.

12. Structure de communication (1) selon au moins l'une des revendications précédentes, **caractérisée en ce que** la structure de communication (1) est une topologie en étoile ou en anneau ou une topologie combinée en étoile et en anneau.
